(19) **Europäisches Patentamt**

**European Patent Office**

**Office européen des brevets**

(11) **EP 0 997 701 B1**

(12) **EUROPÄISCHE PATENTSCHRIFT**

(45) Veröffentlichungstag und Bekanntmachung des Hinweises auf die Patenterteilung:
**09.11.2005   Patentblatt 2005/45**

(51) Int Cl.7: **G01B 7/30**, G01D 3/02

(21) Anmeldenummer: **99203527.9**

(22) Anmeldetag: **25.10.1999**

(54) **Offsetkompensiertes Winkelmessystem**

Offset compensated angle measuring system

Système de mesure d'angles avec une compensation de la tension offset

(84) Benannte Vertragsstaaten:
**DE FR GB**

(30) Priorität: **29.10.1998   DE 19849910**

(43) Veröffentlichungstag der Anmeldung:
**03.05.2000   Patentblatt 2000/18**

(73) Patentinhaber:
• **Philips Intellectual Property & Standards GmbH**
  **20099 Hamburg (DE)**
  Benannte Vertragsstaaten:
  **DE**
• **Koninklijke Philips Electronics N.V.**
  **5621 BA Eindhoven (NL)**
  Benannte Vertragsstaaten:
  **FR GB**

(72) Erfinder: **Dietmayer, Klaus**
**52064 Aachen (DE)**

(74) Vertreter: **Volmer, Georg**
**Philips Intellectual Property & Standards GmbH,**
**Postfach 50 04 42**
**52088 Aachen (DE)**

(56) Entgegenhaltungen:
**DE-A- 4 029 828          DE-A- 19 548 385**

## Beschreibung

Es wird eine Anordnung zur Messung eines Winkels zwischen einem Magnetfeld und einem magnetoresistiven Sensor, der wenigstens zwei 90° zueinander phasenverschobene elektrische Sensorsignale liefert, die einem Analog/Digital-Umsetzer zugeführt werden und dem eine Winkelberechnungsanordnung nachgeschaltet ist, angegeben.

Derartige Anordnungen zur berührungslosen Winkelmessung werden im Automobilbereich z.B. für die Erfassung des Winkels von Drosselklappen oder des Lenkwinkels eingesetzt. Diese Winkelmessung basiert auf dem magnetoresistiven Effekt. Hierbei wird eine stromdurchflossene ferromagnetische Schicht im Sensor einem Magnetfeld ausgesetzt, wobei sich der Widerstand der Schicht ändert. Durch Verändern der Position des Sensors zum Magnetfeld wird eine Änderung des Widerstandes hervorgerufen. Im folgenden wird ein derartiger Sensor als MR-Sensor bezeichnet.

In dem Datenblatt UZZ9000 von Philips Semiconductors wird ein System beschrieben, das aus zwei um 90° phasenverschobenen Signalen einen Winkel zwischen einem MR-Sensor und einem Permanentmagneten berechnet. Dieser Sensor enthält zwei ineinander verschachtelte Wheatston'sche Brücken, die in einem Winkel von 45° angeordnet sind und die 90° phasenverschobenen sinusförmigen Signale erzeugen. Diese Wheatston'schen Brücken weisen ein exemplarabhängiges Driftverhalten auf, welches nicht systematisch ist. Diese Brückenschaltungen arbeiten aufgrund von Fertigungstoleranzen der Widerstände nicht völlig symmetrisch, wodurch ein statischer Offset in den Sensorsignalen entsteht. Um die dem mit statischen Offset behafteten Sensorsignale abzugleichen, wird bei dem benannten System bei Raumtemperatur durch Anlegen externer Kompensationsspannungen eine einmalige Kompensation des statischen Offsets vorgenommen. Außerdem entstehen dynamische Offsets durch Temperaturänderung und Alterung während des Betriebs der Winkelmeßanordnung. Diese Offsets verfälschen das Meßergebnis erheblich und werden bei der einmaligen Kompensation nicht berücksichtigt.

Es ist Aufgabe der Erfindung eine Anordnung anzugeben, die eine automatische Offsetkompensation der statischen und der dynamischen Offsets kontinuierlich vornimmt.

Diese Aufgabe wird nach dem Anspruch gelöst.

Die erfindungsgemäße Anordnung enthält einen MR-Sensor, der zwei um 90° zueinander phasenverschobene elektrische Sensorsignale liefert, wenn er einem Magnetfeld ausgesetzt wird. Nachdem diese beiden sinusförmigen Sensorsignale analog/digital gewandelt wurden, wird in der Winkelberechnungsanordnung der Winkel zwischen dem MR-Sensor und dem Magnetfeld berechnet. Da diese beiden sinusförmigen Signale orthogonal zueinander sind, läßt sich demzufolge die komplexe Zahlentheorie anwenden, wobei das erste Sensorsignal x beispielsweise den Realteil und das zweite Sensorsignal y den Imaginärteil einer komplexen Zahl oder das Sensorsignal x den Sinus und das Sensorsignal y den Kosinus ein und desselben Winkels darstellen. In der Betragsberechnungsanordnung wird der Sensorsignalbetrag dieser beiden Sensorsignale berechnet. Außerdem wird bezüglich des berechneten Winkels zwischen MR-Sensor und Magnetfeld auch die Betragsänderung berechnet. Aus dieser Betragsänderung oder auch dem Gradienten bezüglich des Winkels berechnet ein Regler eine Gleichspannung, die steuerbaren Vorverstärkern zugeführt wird, um die beiden vom MR-Sensor kommenden Sensorsignale so zu beeinflussen, daß die Offsets, mit denen die Sensorsignale behaftet sind, abgeglichen werden und sich demzufolge die Betragsänderung bezüglich des Winkels verringert und idealer Weise verschwindet. Die steuerbaren Vorverstärker sind dem Analog/Digital-Umsetzer vorgeschaltet und verstärken das jeweilige vom Sensor zugeführte Signal. In den steuerbaren Vorverstärker wird den Sensorsignalen eine in Abhängigkeit der vom Regler berechneten Offsetwerte von außen zugeführte Gleichspannung additiv überlagert. Damit werden das Meßergebnis verfälschende Offsets abgeglichen, so daß bei der folgenden Betragsänderungsberechnung keine Betragsänderung bezüglich des Winkels vorliegt.

Ein Vorteil der genannten Erfindung gegenüber dem Stand der Technik besteht darin, daß durch die Betragsänderungsberechnung dynamische Offsets, die durch Alterung und Temperaturschwankung entstehen, während der Messung abgeglichen werden, aber auch die statischen Offsets kompensiert werden, die durch die nicht symmetrische Brückenmittenspannung der im Sensor befindlichen Wheatston'schen Brücken entstehen. Da die Betragsberechnung parallel zur Winkelberechnung in der Berechnungsanordnung erfolgt, ist ein kontinuierlicher Offsetabgleich möglich.

Bei einer Ausgestaltung der Erfindung erweist es sich als vorteilhaft die Anordnung mit einem Speicher zu ergänzen, in dem die Offsetwerte gespeichert werden, und so bei Beginn einer Winkelmessung einen schnelleren Abgleich der Offsets zu erreichen.

Der Sensorsignalbetrag wird bezüglich des Winkels differenziert, wodurch hochfrequente Störsignale verstärkt werden, so daß es sich vorteilhaft erweist, die Differentation mit einer Tiefpaß-Filterung zu koppeln.

Vorteilhaft kann vorgesehen sein, daß die Sensorsignale erst nach ihrer Analog/Digital-Wandlung mit einem in Abhängigkeit der Betragsänderung berechneten Korrektursignal so beeinflußt werden, daß die Betragsänderung verringert wird und verschwindet.

Zur Berechnung des Winkels und des Sensorsignalbetrages wird gemäß einer weiteren Ausgestaltung der Erfindung ein CORDIC-Algorithmus benutzt. Der CORDIC-Algorithmus ist ein Approximationsverfahren. Er basiert auf mathematischen Basisfunktionen, wie Addition und Stellenverschiebung sowie einem Auslesen von Tabellenwerten. Bei der Winkelbestimmung wird ein in der komplexen Ebene durch seine Koordinaten gegebener Zeiger schrittweise gedreht, bis der Imaginärteil verschwindet und der Zeiger nach einer Anzahl von Drehoperationen auf der reellen Achse zum Liegen kommt. Nachdem dieses Abbruchkriterium erreicht ist, erhält man aus der Anzahl der Drehschritte den gesuchten Winkel.

Nachfolgend wird ein Ausführungsbeispiel anhand der Zeichnungen näher erläutert.

Die einzige Figur der Zeichnungen zeigt ein Blockschaltbild der erfindungsgemäßen Anordnung

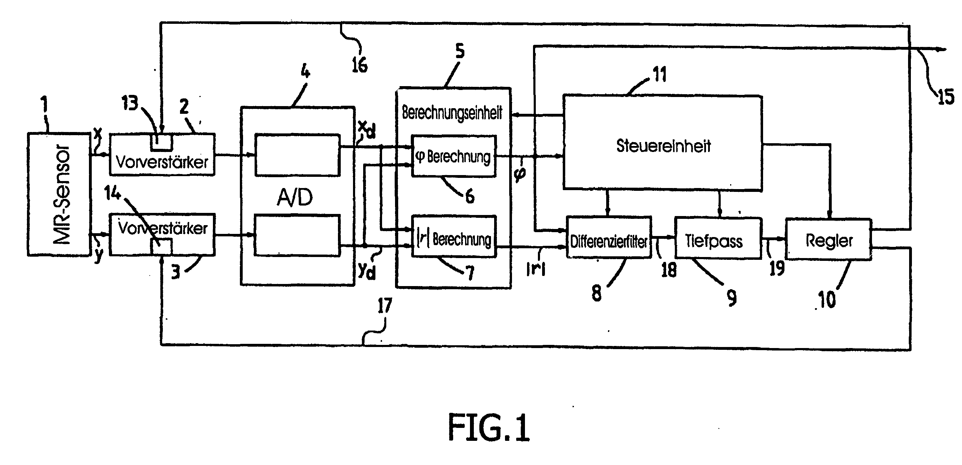

Figur 1 zeigt eine Winkelmeßanordnung zur berührungslosen Messung eines Winkels zwischen einem MR-Sensor 1 und einem nichtdargestellten Magnetfeld. Der magnetoresitive Sensor 1 liefert die Sensorsignale x und y. Diese werden je einer Vorverstärkerstufe 2 und 3 zugeführt. Die Vorverstärkerstufen 2 und 3 enthalten Stelleinrichtungen 13 und 14 zur Überlagerung der Sensorsignale mit einer von außen zugeführten, nicht dargestellten Gleichspannung. Diesen Stelleinrichtungen 13 und 14 werden Steuersignale zugeführt, die von den im Regler 10 berechneten Offsetwerten abhängig sind. Nachdem die beiden um 90° phasenverschobenen elektrischen Sensorsignale x und y in den Vorverstärkerstufen 2 und 3 verstärkt wurden, werden die analogen Sensorsignale x und y in digitale Sensorsignale $x_d$ und $y_d$ im A/D-Umsetzer 4 gewandelt. Diese digitalen Sensorsignale $x_d$ und $y_d$ werden jeweils einer Winkelberechnungsanordnung 6 und einer Betragsberechnungsanordnung 7 in einer Berechnungsanordnung 5 zugeführt. In der Berechnungsanordnung 5 sind die Winkel- 6 und die Betragsberechnungsanordnung 7 parallel zueinander angeordnet. In der Winkelberechnungsanordnung 6 wird mit dem CORDIC-Algorithmus aus den zugeführten digitalen Sensorsignalen $x_d$ und $y_d$ der Winkel φ zwischen MR-Sensor und Magnetfeld berechnet, der der Steuereinheit 11, dem Differenzierfilter 8 und dem Ausgang 15 zugeführt wird.

Die nur auf diesem Wege durchgeführte Winkelberechnung des Winkels φ ist noch fehlerhaft, da die Sensorsignale x und y noch nicht von den Offsets bereinigt sind. Um erfindungsgemäß die Betragsänderung zur Offsetkompensation zu nutzen, wird der Sensorsignalbetrag |r| der Sensorsignale x und y in der Betragsberechnungsanordnung 7 nach der Formel $|r| = \sqrt{y^2 + x^2}$ berechnet. Zur Berechnung des Sensorsignalbetrages |r| wird auch der CORDIC-Algorithmus verwendet. Der Sensorsignalbetrag wird dem Differenzierfilter 8 zugeführt und in Abhängigkeit des berechneten Winkel φ einer Differentation unterzogen. Das Betragsänderungssignal 18 wird tiefpaß-gefiltert. Nach der Tiefpaß-Filterung wird das gefilterte Betragsänderungssignal 19 dem Regler 10 zugeführt, in dem die Offsetwerte der Sensorsignale x und y berechnet werden. Mit den so berechneten Offsetwerten werden Steuersignale 16 und 17 erzeugt, die den Stelleinrichtungen 13 und 14 zugeführt werden, die in den Vorverstärkerstufen 2 und 3 angeordnet sind, um die Sensorsignale x und y mit einer entsprechenden Gleichspannung zu überlagern und die Offsets abzugleichen. Die Steuereinheit 11 dient der Zwischenspeicherung von Winkelwerten und der Steuerung zeitlicher Abläufe zwischen der Berechnungsanordnung 5 mit der Betragsberechnungsanordnung 7 und der Winkelberechnungsanordnung 6, sowie des Differenzierfilters 8, des Tiefpasses 9 und des Reglers 10.

Im folgenden werden die mathematischen Zusammenhänge erläutert. Die vom Sensor gelieferten Sensorsignale x und y lassen sich aufgrund ihrer Phasenverschiebung von 90° als Sinus- und Cosinuswert ein und desselben Winkel φ interpretieren. Aufgrund der Orthogonalität der Sinus- und Cosinusfunktionen lassen sich die Werte dann als Real- und Imaginärteil einer komplexen Zahl z = x+jy auffassen; somit sind die Rechenregeln komplexer Zahlen insbesondere die Euler-Beziehung

$$z = x + \mathrm{j}y = r \cdot \mathrm{e}^{J\varphi} \tag{1}$$

anwendbar. Der gesuchte Winkel φ ergibt sich somit in einfacher Weise aus den Meßsignalen gemäß

$$\varphi = \mathrm{ArcTan}\left(\frac{y}{x}\right) \tag{2}$$

Zur Ermittlung der Offsetwerte wird die Betraginformation herangezogen.
Der Sensorsignalbetrag der Sensorsignale x und y berechnet sich nach

$$|r| = \sqrt{y^2 + x^2} \tag{3}$$

Falls in keinem der beiden Sensorsignale ein Offset enthalten wäre, x und y also rein sinusförmige Signale wären, besäße die Betragsfunktion keine Winkelabhängigkeit, d.h. es würde gelten:

$$\frac{dr}{d\varphi} = 0 \ . \tag{4}$$

Berücksichtigt man hingegen einen Offset, so erhält man allgemein den folgenden funktionalen Zusammenhang

$$\frac{dr}{d\varphi} = (\Delta x \cdot \cos\varphi - \Delta y \cdot \sin\varphi) \tag{5}$$

mit:

$\Delta x$ = Offset der Brücke x
$\Delta y$ = Offset der Brücke y
$\varphi$ = Elektrischer Winkel

Gemäß Gl. (5) ist für die bestimmte Winkel (0°, 90°, 180° und 270°) der jeweilige Offset identisch mit der Betragsänderung bezüglich $\varphi$ (siehe Tabelle 1). Dieser einfache Zusammenhang kann auch noch in einer Umgebung von mindestens +/- 5° um die ausgezeichneten Winkel in guter Näherung angewendet werden. Daher ist es möglich, den bei der augenblicklichen Messung bestimmten Winkel für diese Einordnung zu verwenden. Man ist somit nicht auf eine externe Referenz angewiesen.

**Tabelle 1:** Bestimmung des Offsets bei ausgezeichneten Winkeln

| Winkel | Offsetparameter |
|---|---|
| $\varphi = 0°$ | $\left.\dfrac{dr}{d\varphi}\right|_{\varphi=0°} = \Delta x$ |
| $\varphi = 90°$ | $\left.\dfrac{dr}{d\varphi}\right|_{\varphi=90°} = -\Delta y$ |
| $\varphi = 180°$ | $\left.\dfrac{dr}{d\varphi}\right|_{\varphi=180°} = -\Delta x$ |
| $\varphi = 270°$ | $\left.\dfrac{dr}{d\varphi}\right|_{\varphi=270°} = \Delta y$ |

Da G1. (5) aber ferner auch linear in den gesuchten Offsetwerten $\Delta x$ und $\Delta y$ ist, erlaubt eine Mehrfachmessung der Betragsänderung bei unterschiedlichen, dann aber beliebigen Winkeln $\varphi$ auch die direkte Bestimmung beider Offsetwerte. Es sind mindestens zwei unabhängige Einzelmessungen erforderlich. Unter Vernachlässigung anderer Fehlereinflüsse liefern die beiden Brücken folgende offsetbehafteten aber sonst idealen Signale:

$$x = A \cdot \sin\varphi + \Delta x \tag{6}$$

$$y = A \cdot \cos\varphi + \Delta y \tag{7}$$

mit:

A: gemeinsame Signalamplitude

$\varphi$ : elektrischer Winkel

$\Delta x$: Offset der x-Brücke

$\Delta y$ : Offset der *y*-Brücke

Die allgemeine Berechnung des Sensorsignalbetrages liefert zunächst:

$$|r| = \sqrt{(A\,\sin\varphi + \Delta x)^2 + (A\cos\varphi + \Delta y)^2}$$

$$= \sqrt{A^2 + 2A(\Delta x\sin\varphi + \Delta y\cos\varphi) + \Delta x^2 + \Delta y^2} \tag{8}$$

Bildet man hiervon den Gradienten oder die Betragsänderung bezüglich $\varphi$, so erhält man

$$\frac{dr}{d\varphi} = \frac{A(\Delta x\cos\varphi - \Delta y\sin\varphi)}{\sqrt{A^2 + 2A(\Delta x\sin\varphi + \Delta y\cos\varphi) + \Delta x^2 + \Delta y^2}} \tag{9}$$

Berücksichtigt man nun, daß allgemein A >> $\Delta x$ und $\Delta y$ ist und diese Relation mit zunehmenden Abgleich der Anordnung immer besser erfüllt ist, so vereinfacht sich Gl. (9) gemäß Gl. (5)

$$\frac{dr}{d\varphi} = r' = (\Delta x \cdot \cos\varphi - \Delta y \cdot \sin\varphi). \tag{5}$$

Auf die direkte Auswertbarkeit dieser Gleichung bei den bestimmten Winkeln (0°, 90°, 180° und 270°) wurde schon hingewiesen (siehe Tabelle 1). Die Ermittlung des Offsets bei beliebigen Winkeln erfordert die Auswertung von mindestens zwei Einzelmessungen der Betragsänderung bei unterschiedlichen Winkeln. Angenommen, es wurde bei den Winkeln $\varphi_1$ und $\varphi_2$ jeweils der Gradient des Sensorsignalbetrages oder die Betragsänderung ermittelt, so erhält man die zwei linear unabhängigen Bestimmungsgleichungen

$$r_1' = (\Delta x \cdot \cos\varphi_1 - \Delta y \cdot \sin\varphi_1), \tag{10}$$

$$r_2' = (\Delta x \cdot \cos\varphi_2 - \Delta y \cdot \sin\varphi_2). \tag{11}$$

Subtrahiert man beide Gleichungen und löst unter Anwendung der Additionstheoreme trigonometrischer Funktionen nach $\Delta x$ bzw. $\Delta y$ auf, so erhält man:

$$\Delta x = \frac{r_2'\sin\varphi_1 - r_1'\,\sin\varphi_2}{\sin(\varphi_1 - \varphi_2)} \tag{12}$$

$$\Delta y = \frac{r_2'\cos\varphi_1 - r_1'\cos\varphi_2}{\sin(\varphi_1 - \varphi_2)} \tag{13}$$

Mit Hilfe einer Look-Up Table lassen sich die trigonometrischen Funktionen ebenfalls sehr effizient ermitteln. Es ist allerdings zu berücksichtigen, daß Gl. (12) und (13) nicht nur bei identischen Winkeln sondern auch bei Winkeldifferenzen von 180° singulär werden. Dies liegt in der Periodizität der Ursprungsgleichung Gl. (5) begründet und ist bei der Implementation entsprechend zu beachten.

Der Sensorsignalbetrag selbst läßt sich beispielsweise im Rahmen des CORDIC Algorithmus ohne großen Zusatzaufwand mit berechnen. Den Gradienten oder die Betragsänderung bezüglich $\varphi$ erhält man anschließend z. B. mit Hilfe eines digitalen Differenzierfilters. In diesem Differenzierfuter wird beispielsweise folgende Differenzengleichung ausgeführt

$$y(vT) = x(vT) - (1 + c_0)x((v-1)T) \tag{15}$$

mit :

| $y(\nu T)$: | Ausgangsgröße des Filters zum aktuellen Abtastzeitpunkt |
|---|---|
| $x(\nu T)$: | Eingangsgröße des Filters zum aktuellen Abtastzeitpunkt |
| $x((\nu\text{-}1)T)$: | Eingangsgröße des Filters beim letzten Abtastzeitpunkt |
| $c_0$ : | Koeffizient, der die Eckfrequenz des Filters festlegt |
| $\nu$: | Integer |
| $T$ | Abtastraster |

Im Differenzierfilter werden mit dieser Differenzengleichung die Differentation und gleichzeitig die Tiefpaß-Filterung vorgenommen.

Für Winkel, die die oben genannte Gleichung (5) nicht vereinfachen, ist es notwendig, den Wert des Winkels der vorhergehenden Winkelmessung zu berücksichtigen. Dieser Winkelwert wird deshalb von der Winkelberechnungsanordnung 6 an die Steuereinheit 11 übergeben, wo er gespeichert wird. Mit Hilfe der Gleichungen (12) und (13) lassen sich dann, nachdem ein zweiter Winkel $\varphi_2$ berechnet wurde, die Offsetwerte $\Delta x$ und $\Delta y$ berechnen.

Die im Differenzfilter 8 berechnete Betragsänderung oder Gradient $\frac{dr}{d\varphi}$ wird einem Tiefpaß 9 zugeführt um Störungen bzw. hochfrequentes Rauschen zu unterdrücken. Dem Regler 10 wird das gefilterte Betragsänderungssignal 19 zugeführt. Der Regler 10 berechnet dann anhand der Gleichungen (12) und (13) die Offsetwerte des jeweiligen Sensorsignal x und y. Mit Hilfe dieser vom Regler 10 berechneten Offsetwerte werden Steuersignale 16 und 17 generiert, die die Stelleinrichtungen 13 und 14 in den Vorverstärkerstufen 2 und 3 ansteuern. Diese Steuersignale werden den Stelleinrichtungen 13 und 14 zugeführt, die den durch die Offsetwerte verfälschten Sensorsignalen x und y eine Gleichspannung überlagern. Damit wird je nach Genauigkeit der Berechnungen von Winkel und Sensorsignalbetrag in mehreren Schritten ein Offsetabgleich durchgeführt.

Mit dieser Anordnungen zur Messung von Winkeln läßt sich eine genauere Winkelmessung durchführen. Durch diese Anordnung kann die aufwendige und einmalige Kompensation der statischen Offsetwerte, wie sie in der Anordnung im Stand der Technik verwendet wurde, entfallen.

## Patentansprüche

**1.** Anordnung zur Messung eines Winkels $\varphi$ zwischen einem Magnetfeld und einem MR-Sensor (1), der wenigstens zwei um 90° zueinander phasenverschobene elektrische Sensorsignale x und y liefert, die zur Zuführung zu einem Analog/Digital-Umsetzer (4) vorgesehen sind, dem eine Winkelberechnungsanordnung (6) nachgeschaltet ist, **dadurch gekennzeichnet,** **dass** in einer Betragsberechnungsanordnung (7) eine Bestimmung eines Sensorsignalbetrag $|r|$ der beiden Sensorsignale x und y nach der Formel $|r| = y^2 + x^2$ und daraus einer Änderung des Sensorsignalbetrages in Abhängigkeit vom berechneten Winkel vorgesehen ist und dass eine Offsetregelung der Sensorsignale x und y in Abhängigkeit dieser Änderung des Sensorsignalbetrages vorgesehen ist.

**2.** Anordnung nach Anspruch 1, **dadurch gekennzeichnet,** **dass** dem Analog/Digital Umsetzer (4) steuerbare Vorverstärker (2) und (3) vorgeschaltet sind, welche zur-additiven Überlagerung der Sensorsignale x und y mit je einer von außen zugeführten Gleichspannung in Abhängigkeit des Betragsänderungssignals (18) vorgesehen sind.

**3.** Anordnung nach Anspruch 1, **dadurch gekennzeichnet,** **dass** eine Beeinflussung der digital gewandelten Sensorsignale mit einem in Abhängigkeit vom Betragsänderungssignals (18) berechneten digitalen Korrektursignal vorgesehen ist.

**4.** Anordnung nach Anspruch 1 **dadurch gekennzeichnet,** **dass** die Betragsberechnungsanordnung (7) in die Berechungsanordnung (5) integriert ist und die Betrags- und Winkelberechnung parallel erfolgt.

**5.** Anordnung nach Anspruch 1 **dadurch gekennzeichnet,** **dass** Offsetwerte speicherbar und beim Starten der Anordnung aufrufbar sind.

**6.** Anordnung nach Anspruch 1,
**dadurch gekennzeichnet,**
**dass** ein Tiefpass (9) zur Filterung der winkelabhängigen Betragsänderung angeordnet ist.

**7.** Anordnung nach Anspruch 1,
**dadurch gekennzeichnet,**
**dass** in der Berechnungsanordnung (5) ein CORDIC Algorithmus zur Winkel- und Betragsberechnung anwendbar ist.

**8.** Anordnung nach Anspruch 1,
**dadurch gekennzeichnet,**
**dass** eine kontinuierliche Berechung der winkelabhängigen Betragsänderung vorgesehen ist.

**Claims**

**1.** A device for measuring an angle $\varphi$ between a magnetic field and a magnetoresistive sensor (1) which supplies at least two mutually 90° phase-shifted electrical sensor signals x and y which are supplied to an analog/digital converter (4), and downstream of which an angle calculating device (6) is connected, **characterized in that** the absolute value |r| of the two sensor signals x and y is calculated in a total calculation device (7) from the equation $|r| = \sqrt{y^2 \ x^2}$, **in that** a change in the absolute value of the sensor signals is determined in dependence on the calculated angle, and **in that** an offset control of the sensor signals x and y is carried out in dependence on said change in the absolute value of the sensor signal.

**2.** A device as claimed in claim 1, **characterized in that** controllable preamplifiers (2) and (3) are connected upstream of the analog/digital converter (4), which preamplifiers additively superimpose an externally provided DC voltage on the sensor signals x and y in dependence on the signal (18) representing the change in absolute value.

**3.** A device as claimed in claim 1, **characterized in that** the digitally converted sensor signals are modified by means of a digital correction signal calculated in dependence on the signal (18) representing the change in absolute value.

**4.** A device as claimed in claim 1, **characterized in that** the device (7) for calculating the absolute value is integrated with the calculation device (5), and **in that** the calculations of the absolute value and of the angle take place in parallel.

**5.** A device as claimed in claim 1, **characterized in that** the offset values can be stored in a memory and can be called up when the device is started.

**6.** A device as claimed in claim 1, **characterized in that** a low-pass filter (9) is provided for filtering the angle-dependent change in absolute value.

**7.** A device as claimed in claim 1, **characterized in that** a CORDIC algorithm can be used in the calculation device (5) for calculating the angle and absolute value.

**8.** A device as claimed in claim 1, **characterized in that** the angle-dependent change in absolute value is calculated continuously.

**Revendications**

**1.** Dispositif de mesure d'un angle $\varphi$ entre un champ magnétique et un capteur magnétorésistif (1) qui délivre au moins deux signaux de capteur électriques déphasés réciproquement de 90° qui sont amenés à un convertisseur analogique/numérique (4), et en aval duquel est raccordé un dispositif de calcul d'angles (6), **caractérisé en ce que** la valeur absolue |r| des deux signaux de capteur x et y est calculée dans un dispositif de calcul total (7) à partir de l'équation $|r| = \sqrt{y^2 + x^2}$, **en ce que** le changement en valeur absolue des signaux de capteur est déterminé en fonction de l'angle calculé et **en ce qu'**un réglage du décalage des signaux de capteur x et y est effectué en fonction dudit changement en valeur absolue.

**2.** Dispositif selon la revendication 1, **caractérisé en ce que** les préamplificateurs commandables (2) et (3) sont raccordés en amont du convertisseur analogique/numérique (4), lesquels préamplificateurs superposent par addition une tension CC amenée de l'extérieur sur les signaux de capteur x et y en fonction du signal (18) représentant le changement en valeur absolue.

**3.** Dispositif selon la revendication 1, **caractérisé en ce que** les signaux de capteur convertis numériquement sont modifiés au moyen d'un signal de correction numérique calculé en fonction du signal (18) représentant le changement en valeur absolue.

**4.** Dispositif selon la revendication 1, **caractérisé en ce que** le dispositif (7) de calcul de la valeur absolue est intégré dans le dispositif de calcul (5), et **en ce que** les calculs de la valeur absolue et de l'angle se déroulent en parallèle.

**5.** Dispositif selon la revendication 1, **caractérisé en ce que** les valeurs de décalage peuvent être enregistrées dans une mémoire et peuvent être appelées lors du démarrage du dispositif.

**6.** Dispositif selon la revendication 1, **caractérisé en ce que** le changement dépendant de l'angle en valeur absolue subit un filtrage passe-bas.

**7.** Dispositif selon la revendication 1, **caractérisé en ce qu'**un algorithme CORDIC peut être utilisé dans le dispositif de calcul (5) pour le calcul de l'angle et de la valeur absolue.

**8.** Dispositif selon la revendication 1, **caractérisé en ce que** le changement dépendant de l'angle en valeur absolue est calculé en continu.

**FIG.1**